# DEMANDE DE BREVET EUROPEEN

(11) **EP 0 814 399 A1**
(43) Date de publication de la demande: **29.12.1997**
(21) Numéro de dépôt: 97401451.6
(22) Date de dépôt: 20.06.1997
(51) Int. Cl.: G06F 1/26, G06F 1/28, G11B 33/12

(54) **Dispositif et procédé pour alimenter un lecteur externe de support d'informations connecté à un ordinateur, et lecteur externe incluant ce dispositif**

(30) Priorité: 21.06.1996 FR 9607782; 27.11.1996 US 31510 P
(71) Demandeur: Archos, 91370 Verrieres le Buisson (FR)
(72) Inventeur: Crohas, Henri, 91370 Verrieres Le Buisson (FR)
(74) Mandataire: Pontet, Bernard

(57) **Abrégé**

Dispositif pour alimenter un lecteur externe de support d'informations, notamment un lecteur de CD-ROM et/ou de disque dur, connecté à un ordinateur via un premier port, notamment un port PCMCIA ou un port parallèle, ce dispositif comportant un accès à une première source de tension d'alimentation (Vcc) au sein de l'ordinateur.

Ce dispositif d'alimentation comprend:
- des moyens de stockage d'énergie (1') chargés par la première source de tension d'alimentation (Vcc),
- un circuit limiteur de courant (2) inséré entre la première source de tension d'alimentation (Vcc) et les moyens de stockage d'énergie (1'), et
- un circuit élévateur (3) de la tension de sortie des moyens de stockage d'énergie (1').

Les moyens de stockage d'énergie peuvent être réalisés soit sous la forme d'une batterie tampon, soit sous la forme d'un condensateur. Dans ce dernier cas, une batterie tampon est connectée en sortie du circuit élévateur.

Ce dispositif d'alimentation permet de concevoir des lecteurs externes ne nécessitant pas d'alimentation secteur.

Utilisation pour des ordinateurs portables, en micro-informatique professionnelle et familiale

## Description

La présente invention concerne un dispositif pour alimenter un lecteur externe de support d'informations connecté à un ordinateur, en particulier un microordinateur, à partir d'un port, notamment un port PCMCIA ou un port parallèle. Elle vise plus particulièrement les ordinateurs portables. L'invention vise également un procédé d'alimentation mis en oeuvre dans ce dispositif, ainsi qu'un lecteur externe incluant ce dispositif.

Une grande difficulté dans l'adaptation d'un lecteur de disque dur et/ou de CD-ROM sur le port PCMCIA d'un ordinateur portable réside dans les faibles puissances disponibles sur les broches d'alimentation des ports PCMCIA. Pour alimenter ces périphériques sans recours à une alimentation externe, deux tensions sont disponibles: une tension d'alimentation générale Vcc égale à 5 V ou à 3,3 V, et une tension d'alimentation secondaire Vpp égale à 12 V. Par ailleurs, dans le cas d'un lecteur externe connecté à un port parallèle d'un ordinateur, il faut de toute façon prévoir un autre accès à la première source de tension d'alimentation (Vcc), aucune tension d'alimentation n'étant généralement disponible sur ce type de port.

Sur l'alimentation générale en 5 V, on peut en pratique tirer un courant maximum de l'ordre de 500 mA, mais ce courant est souvent limité par une résistance de protection interne de l'ordre de 1 Ω. Il en résulte que, sous ce courant appelé, la tension de sortie est réduite en dessous du seuil de la logique TTL: 4,75 V, ce qui ne permet pas une alimentation directe de circuits logiques d'une puissance supérieure à 1 W.

Le courant maximum autorisé sur l'alimentation secondaire en 12 V est la plupart du temps de l'ordre de 60 mA, avec une résistance interne typiquement de 2 Ω.

De plus, ces alimentations sont très souvent protégées par un disjoncteur interne qui a pour effet que, soit les alimentations du port PCMCIA sont coupées, soit l'ordinateur se réinitialise dès que le courant appelé dépasse la valeur maximale permise.

Or, avec l'accroissement des performances des lecteurs externes, et notamment des vitesses de rotation des têtes de lecture, les besoins en courant de pointe sont de plus en plus élevés et les dispositifs d'alimentation actuels ne sont pas en mesure de les satisfaire.

Le but de l'invention est de remédier à ces inconvénients en proposant un dispositif d'alimentation de lecteur externe qui ne nécessite pas une connexion d'alimentation supplémentaire au secteur, tout en pouvant délivrer un courant de pointe au moins supérieur à 1 A.

Il s'agit d'un dispositif pour alimenter un lecteur externe de support d'informations, notamment un lecteur de CD-ROM et/ou de disque dur, connecté à un ordinateur via un premier port, notamment un port PCMCIA ou un port parallèle, ce dispositif comportant un accès à une première source de tension d'alimentation (Vcc).

Suivant l'invention, il comprend:
- des moyens pour stocker de l'énergie fournie par la première source d'alimentation,
- des moyens limiteurs de courant insérés entre la première source de tension d'alimentation et les moyens de stockage d'énergie, pour limiter le courant débité par la première source d'alimentation, et
- des premiers moyens pour rehausser la tension de sortie des moyens de stockage d'énergie à un premier niveau de tension requis pour l'alimentation des composants logiques du lecteur externe.

Ainsi, la première source d'alimentation, en l'occurrence la source d'alimentation générale Vcc recharge en permanence les moyens de stockage d'énergie, qui peuvent être une batterie tampon ou un condensateur, par l'intermédiaire d'un limiteur de courant. Dans le cas d'un lecteur externe connecté à un port PCMCIA, cette limitation de courant évite que les disjoncteurs internes de l'alimentation du port PCMCIA soient sollicités. La tension est ensuite rehaussée à 5 V par un circuit à découpage d'un type aujourd'hui très classique, en montage dit de "voltage step-up". Le dispositif selon l'invention autorise en pratique un courant de pointe pouvant atteindre jusqu'à 2 A en sortie tout en appelant un courant régulier sur la première source de tension d'alimentation, ce qui ne peut être envisagé avec une alimentation directe du lecteur externe à partir du port PCMCIA.

Dans une première version, le dispositif d'alimentation selon l'invention comprend, au titre des moyens de stockage d'énergie, une batterie tampon chargée par la première source d'alimentation et délivrant une tension de sortie prédéterminée sensiblement inférieure à la tension nominale délivrée par la première source d'alimentation.

Dans une seconde version, le dispositif d'alimentation selon l'invention comprend, au titre des moyens de stockage d'énergie, un condensateur pour stocker de l'énergie fournie par la première source de tension d'alimentation à un niveau de tension sensiblement égal à celui de cette première source de tension. Il comprend en outre une batterie tampon reliée à la sortie des premiers moyens rehausseurs ou élévateurs de tension pour maintenir la tension de sortie desdits premiers moyens rehausseurs sensiblement au premier niveau de tension.

Cette batterie tampon, qui peut avantageusement être réalisée à partir de quatre cellules Ni-Cd, assure un stockage d'énergie utilisé pour absorber des pics de courant appelés par le lecteur externe.

L'utilisation, dans cette seconde version, d'un condensateur comme moyen de stockage à l'entrée des moyens rehausseurs de tension, au lieu d'une batterie tampon de 3.8 V, constitue un avantage dans la mesure où la tension aux bornes du condensateur peut être effectivement supérieure à 3.8 V, ce qui contribue ainsi à un meilleur rendement des moyens rehausseurs de tension.

En outre, les pointes de courant dues à l'effet de découpage au sein des moyens rehausseurs de tension sont abaissées et les cellules de la batterie tampon travaillent alors dans de meilleures conditions. Dans une variante de cette seconde version, les premiers moyens rehausseurs de tension sont commandés en fonction du courant traversant les moyens limiteurs de courant.

Dans le cas d'un lecteur externe connecté à un port parallèle d'un ordinateur, grâce au dispositif d'alimentation selon l'invention, il devient possible d'utiliser la tension d'alimentation principale (Vcc) accessible sur le port clavier/souris de l'ordinateur.

Pendant les périodes de faible activité ou d'inactivité du lecteur externe, la batterie tampon stocke de l'énergie qui pourra être restituée en période d'activité intense, en particulier quand les têtes magnétiques du disque dur ou de la tête laser du lecteur de CD-ROM bougent.

Dans un mode de réalisation d'un dispositif d'alimentation selon l'invention, celui-ci comprend en outre des moyens pour abaisser la tension délivrée par la seconde source de tension d'alimentation à un niveau sensiblement égal à celui requis pour le lecteur externe, ces moyens abaisseurs de tension fournissant une source complémentaire d'énergie pour alimenter les composants logiques du lecteur externe.

Ainsi, en complément de l'énergie apportée par l'alimentation en 5V, un réducteur de tension à découpage est utilisé pour abaisser la tension de 12 V (seconde source d'alimentation) en 5 V avec un rendement du même ordre, avec un montage classique communément appelé "Voltage step-down". Dans ce mode de réalisation, il est possible de tirer une puissance bien supérieure et d'alimenter un lecteur de CD-ROM de vitesse de rotation supérieure, jumelé ou pas avec un lecteur de disque dur, le tout fonctionnant sous 5 V.

Dans une configuration avantageuse de l'invention, le dispositif d'alimentation peut comprendre en outre des seconds moyens pour rehausser la tension de sortie des moyens de stockage d'énergie à un second niveau de tension requis pour l'alimentation des moyens d'entraînement du lecteur externe. Cette configuration permet de répondre de façon satisfaisante à des besoins en alimentation toujours plus élevés observés avec l'accroissement des vitesses d'entraînement des lecteurs.

Par ailleurs, une option avantageuse consiste à munir le dispositif d'alimentation selon l'invention d'un dispositif de charge rapide des moyens de stockage d'énergie, comportant des moyens pour détecter un niveau de tension de sortie des moyens de stockage d'énergie inférieure à un seuil de tension prédéterminé, des moyens pour interrompre toute connexion entre les moyens de stockage d'énergie et les moyens rehausseurs de tension en cas de détection de tension trop faible. Ainsi, quand la tension chute au dessous d'un seuil prédéterminé, les moyens de stockage d'énergie sont automatiquement isolés de l'étage élévateur de tension, ce qui a pour effet de supprimer la charge en aval et de forcer la charge rapide des moyens de stockage d'énergie à partir du port PCMCIA.

Suivant un autre aspect de l'invention, il est proposé un procédé pour alimenter un lecteur externe de support d'informations, notamment un lecteur de CD-ROM et/ou de disque dur, connecté à un ordinateur via un port PCMCIA, ce port PCMCIA comportant un accès à une première source de tension d'alimentation (Vcc) et un accès à une second source de tension d'alimentation (Vpp), mis en oeuvre dans le dispositif d'alimentation selon l'une quelconque des revendications précédentes. Selon l'invention, ce procédé comprend:
- une charge permanente des moyens de stockage d'énergie (batterie tampon ou condensateur) à partir de la première source d'alimentation,
- une limitation du courant débité par la première source d'alimentation,
une élévation de la tension délivrée par les moyens de stockage d'énergie à un premier niveau de tension requis pour l'alimentation des composants logiques du lecteur externe.

Lorsque ce procédé est mis en oeuvre dans la seconde version du dispositif d'alimentation selon l'invention, ce procédé comprend alors les étapes suivantes:
- une charge permanente d'un condensateur à partir de la première source d'alimentation,
- une limitation du courant débité par la première source d'alimentation,
- une élévation de la tension délivrée par le condensateur à un premier niveau de tension requis pour l'alimentation des composants logiques du lecteur externe, et
- un stockage d'énergie dans une batterie tampon à la sortie des moyens rehausseurs de tension.

D'autres particularités et avantages de l'invention apparaîtront encore dans la description ci-après. Aux dessins annexés donnés à titre d'exemples non limitatifs:
- la figure 1 est un schéma synoptique d'un premier exemple de réalisation d'un dispositif d'alimentation selon une première version de l'invention;
- la figure 2 est un schéma synoptique d'un second exemple de réalisation d'un dispositif d'alimentation selon une première version de l'invention, mettant en oeuvre deux circuits élévateurs de tension;
- la figure 3 illustre un exemple de réalisation pratique d'un dispositif d'alimentation selon une première version de l'invention; et
- la figure 4 est un schéma synoptique d'un troisième exemple de réalisation d'un dispositif d'alimentation selon une première version de l'invention, appliqué à un lecteur externe connecté à un port parallèle d'un ordinateur;
- la figure 5 est un schéma synoptique d'un premier exemple de réalisation d'un dispositif d'alimentation selon une seconde version de l'invention;
- la figure 6 est un schéma synoptique d'un second exemple de réalisation d'un dispositif d'alimentation selon une seconde version de l'invention, mettant en oeuvre deux circuits élévateurs de tension;
- la figure 7 illustre un exemple pratique de réalisation d'un dispositif d'alimentation selon une seconde version de l'invention;
- la figure 8 est un schéma synoptique d'un troisième exemple de réalisation d'un dispositif d'alimentation selon une seconde version de l'invention, appliqué à une unité de lecture externe connectée à un port parallèle d'un ordinateur;
- la figure 9 est un schéma synoptique d'un exemple de réalisation d'un dispositif simplifié d'alimentation selon une seconde version de l'invention, pourvu d'une commande en tension; et
- la figure 10 est un schéma synoptique d'un exemple de réalisation d'un dispositif simplifié d'alimentation selon une seconde version de l'invention, pourvu d'une commande en courant.

On va maintenant décrire, en référence aux figures précitées, plusieurs exemples de réalisation d'un dispositif d'alimentation selon l'invention, appliqué à un lecteur externe connecté à un port PCMCIA ou à un port parallèle d'un ordinateur, en même temps que le procédé d'alimentation mis en oeuvre dans ces dispositifs. Dans la description qui suit, des éléments identiques seront repérés par des références identiques dans l'ensemble des figures précitées. On va tout d'abord considérer la première version de l'invention dans laquelle une batterie tampon est utilisée comme moyen de stockage d'énergie en amont du circuit élévateur de tension.

Dans un premier temps, on considère un lecteur externe L1 selon l'invention, - lecteur de disque dur et/ou de CD-ROM-, relié à un ordinateur portable (non représenté) via un port PCMCIA 8 qui fournit normalement un accès à une première source de tension d'alimentation dite principale Vcc (5 V) et à une seconde source de tension d'alimentation, dite secondaire ou de programmation, Vpp (12 V) . Le lecteur externe L1 inclut un dispositif d'alimentation 10 selon l'invention comprenant un circuit limiteur de courant 2 prévu pour éviter tout risque de sollicitation des disjoncteurs internes d'alimentation du port PCMCIA, une batterie tampon 1 constituée par exemple de trois éléments Ni-Cd (Nickel-Cadmium) délivrant une tension en charge comprise entre 3,8 V et 3,9 V, un circuit élévateur (ou rehausseur) de tension 3 prévu pour délivrer une tension de sortie de 5 V à partir de la tension de la batterie tampon 1, et un dispositif automatique de charge rapide 5 faisant fonction de disjoncteur et permettant une déconnexion entre la batterie tampon 1 et le circuit élévateur de tension 3. La tension de sortie du circuit élévateur de tension 3, qui est de préférence réalisé sous la forme d'un circuit à découpage en montage classique communément appelé "voltage step up", est prévue pour alimenter les composants logiques 6L de l'unité de lecture 6 du lecteur externe 10. Les composants d'entraînement ou de motorisation 6M peuvent en général être alimentés directement à partir de la batterie tampon, car ils ne sont pas soumis aux contraintes requises par la logique TTL. Le dispositif d'alimentation 10 comprend en outre de préférence un circuit abaisseur de tension 4 recevant en entrée la tension secondaire Vpp (12 V) et délivrant une tension basse de 5 V qui peut être directement utilisée pour l'alimentation de composants du lecteur externe et/ou appliquée sur la batterie tampon 1 comme source de charge complémentaire via une diode et une résistance 9 de limitation. Il est à noter que les divers circuits composant le dispositif d'alimentation selon l'invention sont en pratique alimentés à partir de la tension d'alimentation secondaire Vpp.

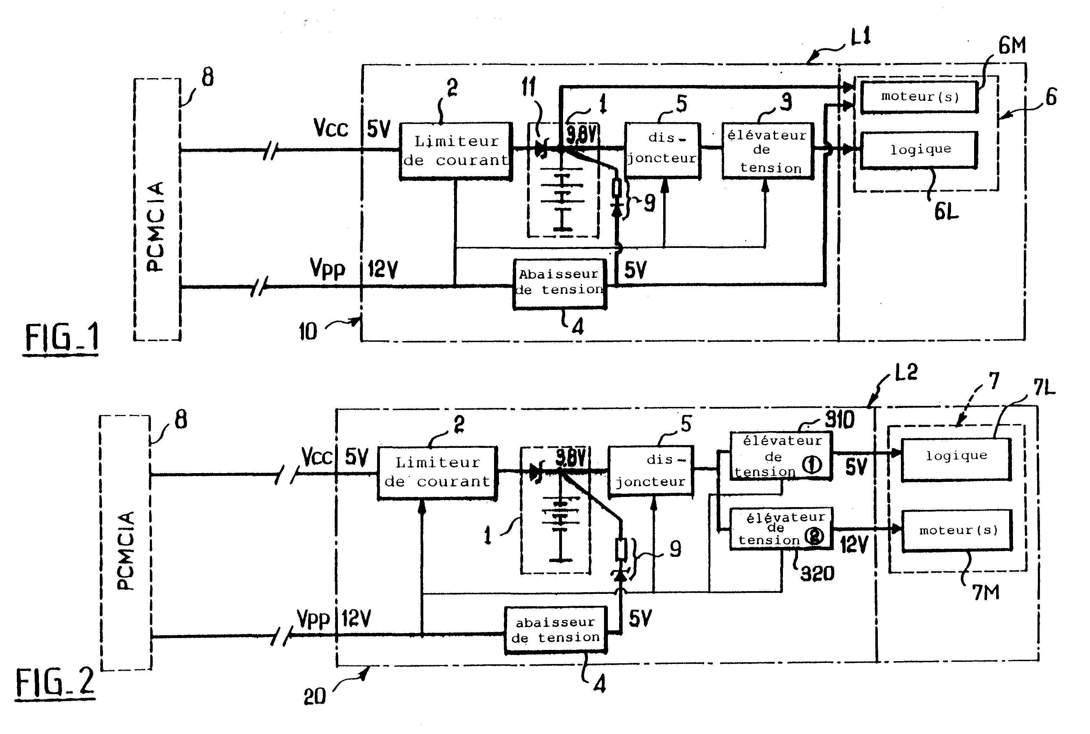

Dans un second mode de réalisation illustré par la figure 2 dans laquelle les éléments communs à la figure 1 présentent des références communes, le lecteur externe L2 comprend un dispositif d'alimentation 20 selon l'invention comprenant, en aval du dispositif de charge automatique 5, un premier circuit élévateur de tension 310 prévu pour alimenter sous une tension de 5 V les composants logiques 7L de l'unité de lecture 7, et un second circuit élévateur de tension 320 prévu pour alimenter sous une tension de 12 V les composants d'entraînement ou de motorisation 7M de ladite unité de lecture 7. Ce type de dispositif d'alimentation est particulièrement approprié pour l'alimentation de lecteurs de CD-ROM à grande vitesse (6X et plus).

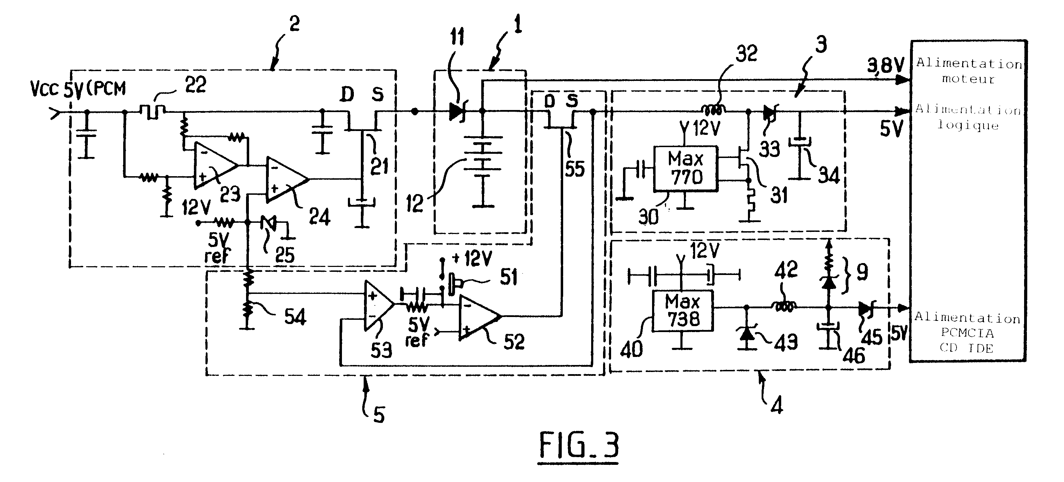

On va maintenant décrire un exemple de réalisation pratique des circuits composant un dispositif d'alimentation selon l'invention, en référence à la figure 3. On fait ici appel à des techniques et des composants très classiques dans le domaine de l'électronique.

Le circuit limiteur de courant 2 peut ainsi comprendre une résistance de shunt 22 en série dans la ligne d'alimentation, un amplificateur 23, un comparateur 24 monté pour détecter un dépassement du courant de ligne au delà d'une consigne de courant, et un interrupteur 21, par exemple un transistor FET, commandé par le comparateur 24 et prévu pour interrompre le circuit d'alimentation en cas de dépassement du courant appelé. Dans cet exemple de réalisation, une diode Zener 25 est prévue pour fournir une référence de tension d'alimentation utilisée comme consigne pour la comparaison.

La batterie tampon 1, réalisée à partir de plusieurs cellules Cd-Ni (en pratique trois pour délivrer 3,8 V), est munie d'une diode 11 disposée en amont pour éviter tout retour de courant dans le cas où la tension de charge de la batterie tampon 1 deviendrait supérieure à la tension de sortie du limiteur 2.

Le dispositif automatique de charge rapide 5 comprend un circuit comparateur 53 pour comparer la tension de sortie de la batterie tampon 1 à un seuil de tension réglable par un potentiomètre 54 relié à la référence de tension d'alimentation, et un amplificateur 52 de commande d'un interrupteur 55, réalisé par exemple sous la forme d'un transistor FET. Cet amplificateur de commande 52 est connecté à un interrupteur de commande de charge rapide 51 actionnable manuellement. Ce dispositif automatique de charge rapide 5 est mis en oeuvre à chaque fois que la tension de batterie devient trop faible. Le dispositif d'alimentation selon l'invention se consacre alors exclusivement à la charge de la batterie tampon 1 et n'alimente plus pendant ce temps les composants du lecteur externe.

Le circuit élévateur (ou rehausseur) de tension 3 est conçu autour d'un circuit intégré spécialisé 30, par exemple de référence Max 770, réalisant la fonction de "voltage step up" et auquel sont normalement associés une petite inductance 32 de l'ordre de 40 µH, un transistor FET 33 à très faible résistance interne, une diode 33 et un condensateur polarisé 34.

Le circuit abaisseur de tension 4 est conçu autour d'un circuit intégré spécialisé 40, par exemple de référence Max 738, alimenté à partir de la tension d'alimentation secondaire de 12 V et auquel sont associés, suivant un schéma classique, une diode 43, une petite inductance 42 et un condensateur polarisé 46. La tension de sortie (5 V) du circuit abaisseur 4 est appliquée d'une part, à la batterie tampon 1 via une diode et une résistance de limitation 9, et d'autre part, à travers une diode 45, pour l'alimentation de composants du lecteur externe (CD-ROM et/ou disque dur).

On va maintenant décrire le procédé d'alimentation ainsi mis en oeuvre, ainsi que les divers transferts d'énergie réalisés dans un dispositif d'alimentation selon l'invention. Dans un premier temps, en l'absence de courant appelé par les composants 6M, 7M à consommation élevée du lecteur externe L1, L2 (par exemple lorsque les têtes de lecture sont au repos), la batterie tampon 1 est chargée en permanence, via le circuit limiteur 2 non sollicité, à partir de la source d'alimentation principale Vcc et éventuellement comme apport complémentaire, à partir de la source d'alimentation secondaire Vpp. L'énergie électrique consommée par les composants logiques 6L, 7L reste modeste et est fournie directement par les sources d'alimentation après conversion dans le circuit élévateur de tension. De plus, pendant les périodes de faible activité ou d'inactivité du lecteur externe, la batterie tampon emmagasine de l'énergie qui pourra être restituée en période d'activité intense.

Lorsque les composants à consommation élevée sont activés (mise en route des têtes de lecture), un courant de pointe élevé (pouvant atteindre 2 A) est appelé et l'énergie électrique nécessaire est alors fournie essentiellement par la batterie tampon 1 qui se décharge progressivement tout au long de l'appel de courant. S'il s'avère que la tension de batterie devient trop faible, un mécanisme de "shut down" est initié avec l'activation du dispositif automatique de charge rapide 5. Le transistor 55 est alors commandé en mode bloqué, la batterie tampon se trouve isolée du circuit élévateur de tension 3 et se recharge rapidement puisque n'ayant plus à délivrer le courant appelé en aval. Lorsqu'une tension de charge suffisante est à nouveau atteinte, le transistor 55 est commandé en mode passant et la batterie tampon 1 est à nouveau connectée au circuit élévateur de tension 3. On peut d'ailleurs prévoir un système d'alerte, notamment d'alerte sonore, pour indiquer à l'utilisateur du lecteur externe, que celui-ci ne va plus être alimenté du fait de l'affaiblissement de la batterie tampon 1.

Avec l'utilisation de circuits à découpage à haute fréquence (plusieurs centaines de kHz), on peut atteindre des rendements voisins de 90% pour les circuits d'élévation et d'abaissement de tension. Le dispositif d'alimentation selon l'invention autorise un courant de pointe pouvant atteindre 2 A en sortie tout en tirant un courant régulier sur le port PCMCIA.

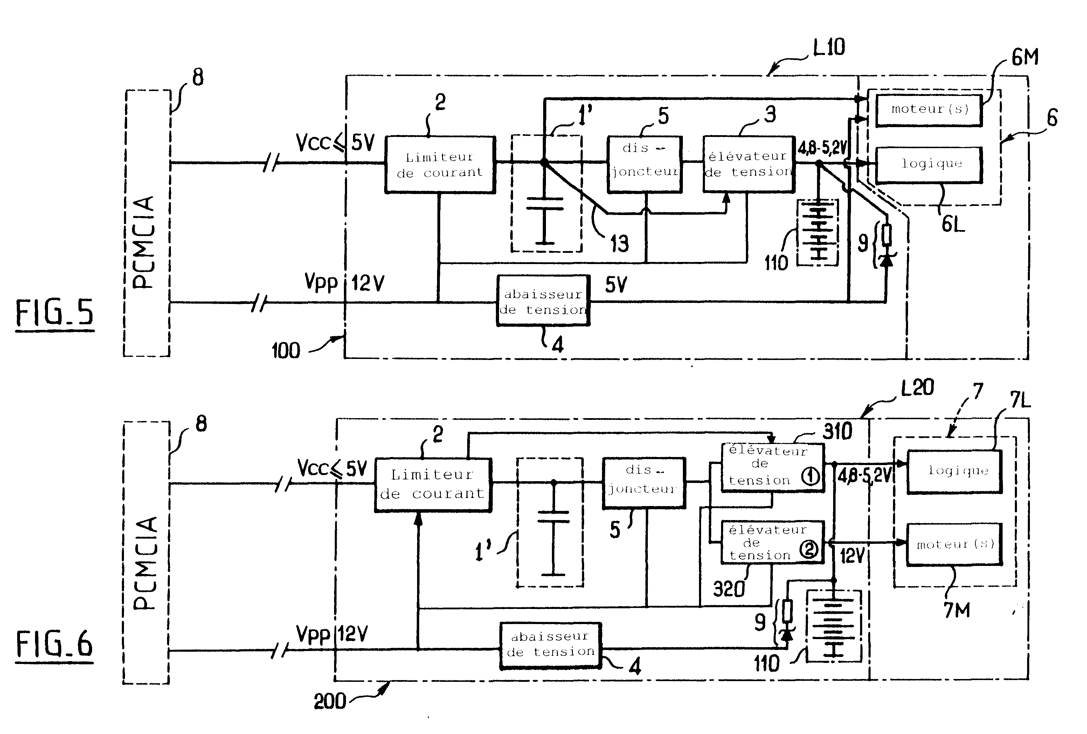

On va maintenant décrire plusieurs exemples de réalisation d'un dispositif d'alimentation selon la seconde version de l'invention, dans laquelle la fonction de stockage d'énergie en amont des moyens rehausseurs de tension est réalisée par un condensateur, en référence aux figures 5 à 10. Pour les blocs fonctionnels communs aux deux versions de l'invention et qui sont repérés par des références communes, on se reportera pour la suite aux descriptions détaillées qui viennent d'en être faites.

Dans un premier exemple de réalisation représenté en figure 5, le lecteur externe L1 inclut un dispositif d'alimentation 100 selon l'invention comprenant un circuit limiteur de courant 2 prévu pour éviter tout risque de sollicitation des disjoncteurs internes d'alimentation du port PCMCIA, un condensateur 1', un circuit élévateur (ou rehausseur) de tension 3 prévu pour délivrer une tension de sortie de 5 V à partir de la tension du condensateur 1', et un dispositif automatique de charge rapide 5 faisant fonction de disjoncteur et permettant une déconnexion entre le condensateur 1' et le circuit élévateur de tension 3. Une batterie tampon 110, constituée par exemple de trois éléments Ni-Cd (Nickel-Cadmium) et ayant une tension en charge comprise entre 3.8 V et 3.9 V, est reliée en sortie du circuit élévateur. Les composants d'entraînement ou de motorisation 6M peuvent en général être alimentés directement à partir de la batterie tampon, car ils ne sont pas soumis aux contraintes requises par la logique TTL. Le dispositif d'alimentation 100 comprend en outre de préférence un circuit abaisseur de tension 4 recevant en entrée la tension secondaire Vpp (12 V) et délivrant une tension basse de 5 V qui peut être directement utilisée pour l'alimentation de composants du lecteur externe et appliquée sur la batterie tampon 110 comme source de charge complémentaire via une diode et une résistance 9 de limitation.

Dans un second mode de réalisation illustré par la figure 6, le lecteur externe L20 comprend un dispositif d'alimentation 200 selon l'invention comprenant, en aval du dispositif de charge automatique 5, un premier circuit élévateur de tension 310 prévu pour alimenter sous une tension de 5 V les composants logiques 7L de l'unité de lecture 7, et un second circuit élévateur de tension 320 prévu pour alimenter sous une tension de 12 V les composants d'entraînement ou de motorisation 7M de ladite unité de lecture 7.

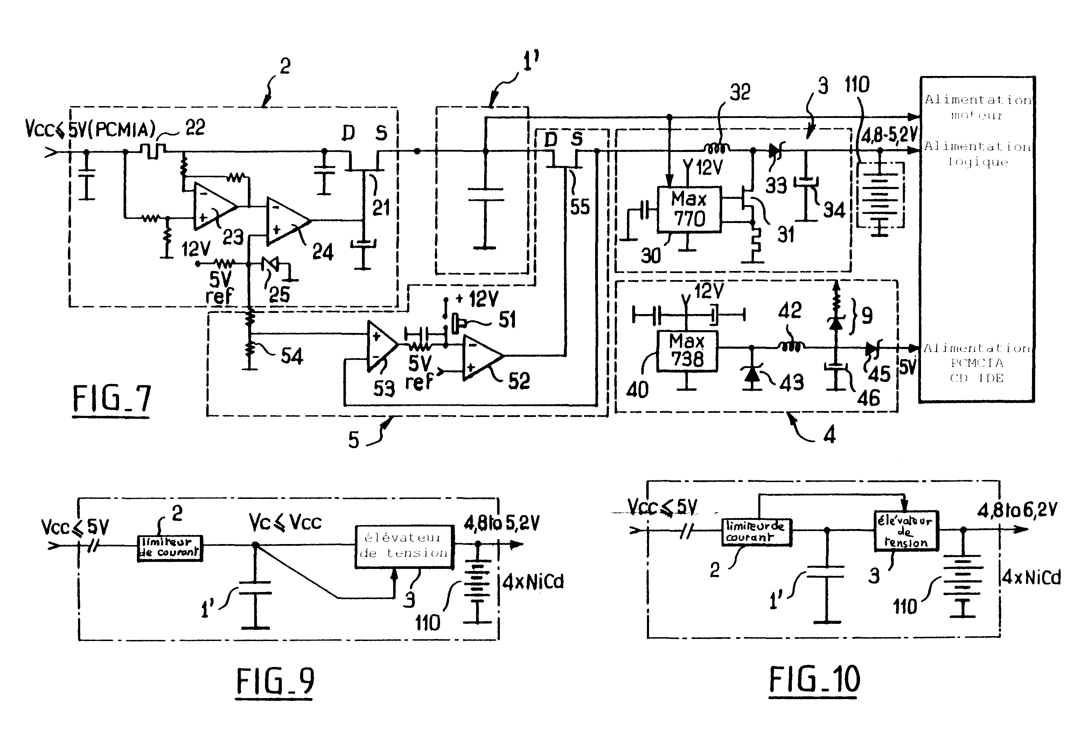

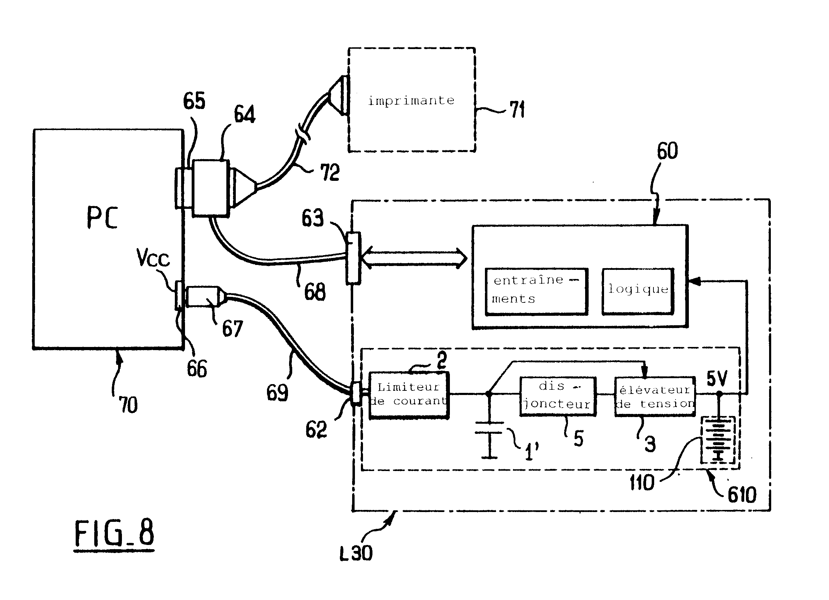

L'exemple de réalisation pratique des circuits composant un dispositif d'alimentation selon l'invention, illustré par la figure 7 est fonctionnellement identique à celui décrit en référence à la figure 3, à l'exception du condensateur 1' substitué à la batterie tampon initiale qui est maintenant connectée en sortie du circuit élévateur de tension.

On va maintenant décrire le procédé d'alimentation ainsi mis en oeuvre dans cette seconde version de l'invention, ainsi que les divers transferts d'énergie réalisés dans un dispositif d'alimentation selon l'invention en référence aux figures 5 et 6. Dans un premier temps, en l'absence de courant appelé par les composants 6M, 7M à consommation élevée du lecteur externe L1, L2 (par exemple lorsque les têtes de lecture sont au repos), le condensateur 1' est chargé en permanence, via le circuit limiteur 2 non sollicité, à partir de la source d'alimentation principale Vcc. Par ailleurs pendant les périodes de faible activité ou d'inactivité du lecteur externe, la batterie tampon de sortie emmagasine de l'énergie qui pourra être restituée en période d'activité intense.

Lorsque les composants à consommation élevée sont activés (mise en route des têtes de lecture), un courant de pointe élevé (pouvant atteindre 2 A) est appelé et l'énergie électrique nécessaire est alors fournie essentiellement par la batterie tampon 110 qui se décharge progressivement tout au long de l'appel de courant. S'il s'avère que la tension aux bornes du condensateur devient trop faible, un mécanisme de "shut down" est initié avec l'activation du dispositif automatique de charge rapide 5. Le transistor 55 est alors commandé en mode bloqué, le condensateur 1' se trouve isolé du circuit élévateur de tension 3 et se recharge rapidement puisque n'ayant plus à délivrer le courant appelé en aval. Lorsqu'une tension de charge suffisante est à nouveau atteinte, le transistor 55 est commandé en mode passant et le condensateur 1' est à nouveau connecté au circuit élévateur de tension 3.

Il est à noter que des dispositifs d'alimentation selon l'invention peuvent également être réalisés avec un nombre minimum de composants, comme l'illustrent les figures 9 et 10. On peut ainsi concevoir des dispositifs comprenant uniquement:
- le limiteur de courant 2;
- le condensateur 1';
- le circuit élévateur de tension 3, commandé soit par la tension aux bornes du condensateur 1' (figure 9), soit par le courant à travers le limiteur de courant 2 (figure 10); et
- la batterie tampon 110.

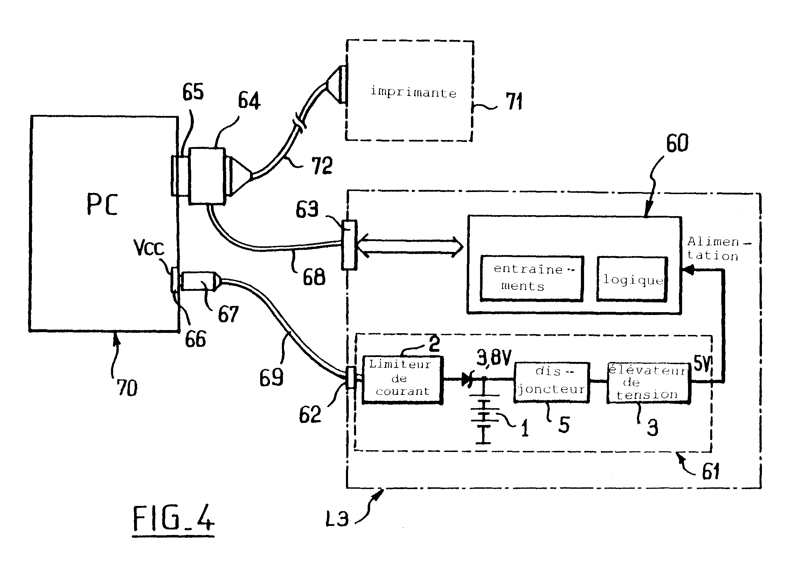

Un dispositif d'alimentation selon l'invention peut également être inclus dans un lecteur externe prévu pour être connecté à un port parallèle d'un ordinateur, comme l'illustrent respectivement les figures 4 et 8 pour les première et seconde versions de l'invention. Un lecteur externe L3, L30 comporte une unité de lecture 60 comprenant des dispositifs d'entraînements et des circuits logiques et reliée à un connecteur IDE 63, et un dispositif d'alimentation 61, 610 selon l'invention relié en entrée à un connecteur d'alimentation 62. L'ordinateur 70, auquel est connecté le lecteur externe L3, comporte un port parallèle 65 sur lequel est connecté un contrôleur IDE 64 de structure bouchon pouvant éventuellement recevoir un câble 72 de connexion à une imprimante 71, et un port clavier/souris 66, destiné notamment à la connexion d'une souris, sur lequel on connecte une fiche 67 de type mini-DIN d'un câble de liaison 69 vers le connecteur d'alimentation 62 du lecteur externe L3. Le contrôleur IDE 64 est relié au connecteur IDE 63 du lecteur externe L3. Le lecteur externe L3 dispose ainsi d'une source d'alimentation par le canal du port clavier/souris.

Bien sûr, l'invention n'est pas limitée aux exemples qui viennent d'être décrits et de nombreux aménagements peuvent être apportés à ces exemples sans sortir du cadre de l'invention. Ainsi, les moyens rehausseurs et abaisseurs de tension peuvent être réalisés selon bien d'autres techniques que celles décrites ici. Il en est de même pour la batterie tampon dont le nombre de cellules et la technologie peuvent dépendre des niveaux de tension respectifs de l'alimentation générale de l'ordinateur et des composants logiques et d'entraînement du lecteur externe.

## Revendications

1. Dispositif (10, 20, 61, 100, 200, 610) pour alimenter un lecteur externe de support d'informations (L1, L2, L3, L10, L20, L30), notamment un lecteur de CD-ROM et/ou de disque dur, connecté à un ordinateur (70) via un premier port, notamment un port PCMCIA (8) ou un port parallèle (65), ce dispositif comportant un accès à une première source de tension d'alimentation (Vcc) au sein de l'ordinateur,
caractérisé en ce qu'il comprend:
- des moyens (1, 1') pour stocker de l'énergie en provenance de la première source de tension d'alimentation (Vcc),
- des moyens limiteurs de courant (2) insérés entre la première source de tension d'alimentation (Vcc) et les moyens de stockage d'énergie (1, 1'), pour limiter le courant débité par la première source de tension d'alimentation (Vcc),
- des premiers moyens (3, 310) pour rehausser la tension de sortie des moyens de stockage d'énergie (1, 1') à un premier niveau de tension (5 V) requis notamment pour l'alimentation des composants logiques (6L, 7L) du lecteur externe (L1, L2, L3, L10, L20, L30).

2. Dispositif d'alimentation (20) selon la revendication 1, caractérisé en ce qu'il comprend en outre des seconds moyens (320) pour rehausser la tension de sortie des seconds moyens de stockage d'énergie (1, 1') à un second niveau de tension (12 V) requis notamment pour l'alimentation de moyens d'entraînement (7M) du lecteur externe (L2) .

3. Dispositif d'alimentation selon l'une des revendications 1 ou 2, caractérisé en ce qu'il comprend en outre un dispositif automatique de charge rapide (5) des seconds moyens de stockage d'énergie (1, 1'), comportant des moyens (52-54) pour détecter un niveau de tension de sortie de batterie inférieure à un seuil de tension prédéterminé, des moyens (55) pour interrompre toute connexion entre les moyens de stockage d'énergie (1, 1') et les moyens rehausseurs de tension (3) en cas de détection de tension de sortie des moyens de stockage d'énergie trop faible.

4. Dispositif d'alimentation selon la revendication 3, caractérisé en ce que le dispositif automatique de charge rapide (5) comprend en outre des moyens (51) pour commander en force les moyens interrupteurs (55).

5. Dispositif d'alimentation (61, 610) selon l'une des revendications précédentes, pour alimenter un lecteur externe (L3, L30) connecté à un port parallèle (65) d'un ordinateur (70) via des premiers moyens de connexion (68, 63), caractérisé en ce qu'il comporte en outre des seconds moyens de connexion (67, 69, 62) pour accéder à la première source de tension d'alimentation (Vcc) via un second port (66) de cet ordinateur (70), notamment un port clavier/souris.

6. Dispositif d'alimentation (10, 20, 61) selon l'une quelconque des revendications précédentes, caractérisé en ce qu'il comprend:
- une batterie tampon (1) chargée par la première source de tension d'alimentation (Vcc) et délivrant une tension de sortie prédéterminée sensiblement inférieure à la tension nominale délivrée par la première source de tension d'alimentation (Vcc),
- des moyens limiteurs de courant (2) insérés entre la première source de tension d'alimentation (Vcc) et la batterie tampon (1), pour limiter le courant débité par la première source de tension d'alimentation (Vcc), et
- des premiers moyens (3, 310) pour rehausser la tension de sortie de la batterie tampon (1) à un premier niveau de tension (5 V) requis notamment pour l'alimentation des composants logiques (6L, 7L) du lecteur externe (L1, L2).

7. Dispositif d'alimentation (100, 200, 610) selon l'une quelconque des revendications 1 à 5, caractérisé en ce qu'il comprend:
- des moyens capacitifs (1') pour stocker de l'énergie provenant de la première source de tension d'alimentation (Vcc) à un niveau de tension sensiblement égal à celui de ladite première source d'alimentation (Vcc),
- des moyens limiteurs de courant (2) connectés entre la première source de tension (Vcc) et les moyens capacitifs (1') pour limiter le courant débité par la première source d'alimentation (Vcc),
- des premiers moyens (3, 310) pour rehausser la tension aux bornes desdits moyens capacitifs (1') à un premier niveau de tension requis pour l'alimentation des composants logiques (6L, 7L) de l'unité de lecture externe (L10, L20), lesdits premiers moyens rehausseurs (3,310) étant commandés en fonction du niveau de tension aux bornes desdits moyens capacitifs (1'), et
- une batterie tampon (110) reliée à la sortie desdits premiers moyens rehausseurs (3, 310) pour sensiblement maintenir la tension de sortie desdits premiers moyens rehausseurs (3, 310) audit premier niveau de tension.

8. Dispositif d'alimentation (100, 200, 610) selon la revendication 7, caractérisé en ce que les premiers moyens rehausseurs de tension (3, 310) sont commandés en fonction du courant traversant les moyens limiteurs de courant (2).

9. Dispositif d'alimentation (10, 20, 100, 200) selon l'une des revendications 6 à 8, pour alimenter un lecteur externe connecté à un ordinateur via un port PCMCIA (8), ce port PCMCIA comprenant un accès à la première source de tension d'alimentation (Vcc) et un accès à une seconde source de tension d'alimentation (Vpp), caractérisé en ce qu'il comprend en outre des moyens (4) pour abaisser la tension délivré par la seconde source de tension d'alimentation (Vpp) à un niveau sensiblement égal à celui requis pour l'alimentation du lecteur externe (L1, L2, L10, L20).

10. Dispositif d'alimentation (10, 20, 100, 300) selon la revendication 9, caractérisé en ce que les moyens abaisseurs de tension (4) sont en outre connectés à la batterie tampon (1, 110) et procurent une source supplémentaire de charge de cette batterie tampon (1, 110)

11. Procédé pour alimenter un lecteur externe de support d'informations (L1, L2, L3, L10, L20, L30), notamment un lecteur de CD-ROM et/ou de disque dur, connecté à un ordinateur (70) via un premier port , notamment un port PCMCIA (8) ou un port parallèle (65) comportant un accès à une première source de tension d'alimentation (Vcc) au sein de cet ordinateur (70), ce procédé étant mis en oeuvre dans le dispositif d'alimentation (10, 20, 61, 100, 200, 610) selon l'une quelconque des revendications précédentes, caractérisé en ce qu'il comprend:
- une charge permanente de moyens de stockage d'énergie (1, 1') à partir de la première source de tension d'alimentation (Vcc),
- une limitation du courant débité par la première source d'alimentation (Vcc), et
une élévation de la tension délivrée par les moyens de stockage d'énergie (1, 1') à un premier niveau de tension requis pour l'alimentation des composants logiques du lecteur externe (L1, L2, L3, L10, L20, L30).

12. Procédé selon la revendication 11, caractérisé en ce qu'il comprend en outre une charge d'une batterie tampon connectée en sortie des premiers moyens rehausseurs de tension.

13. Procédé selon l'une des revendication 11 ou 12, caractérisé en ce qu'il comprend en outre un rehaussement de la tension délivrée par la première source de tension d'alimentation (Vcc) à un second niveau de tension (12 V) requis pour l'alimentation de moyens d'entraînement (7M) du lecteur externe (L2, L20).

14. Procédé selon l'une quelconque des revendications 11 à 13, caractérisé en ce qu'il comprend des séquences automatiques de charge rapide des moyens de stockage d'énergie (1, 1') comportant:
- une détection d'un niveau de tension aux bornes des moyens de stockage d'énergie inférieur à un seuil de tension prédéterminé, et
- en cas de détection, une interruption de toute connexion entre les moyens de stockage d'énergie (1, 1') et les moyens rehausseurs de tension (3, 310, 320).

15. Procédé selon la revendication 14, caractérisé en ce qu'il comprend en outre des séquences commandées de charge rapide des moyens de stockage d'énergie (1, 1') comportant une interruption de toute connexion entre les moyens de stockage d'énergie (1, 1') et les moyens rehausseurs de tension (3, 310, 320).

16. Procédé d'alimentation selon l'une des revendications 12 à 15, appliqué à l'alimentation d'un lecteur externe (L3, L30) connecté à un port PCMCIA (8) d'un ordinateur, ce port PCMCIA (8) fournissant un accès à la première source de tension d'alimentation (Vcc) et un accès à une seconde source de tension d'alimentation (Vpp).

17. Procédé selon la revendication 16, caractérisé en ce qu'il comprend en outre un abaissement de la tension délivrée par la seconde source de tension d'alimentation (Vpp), au niveau requis pour l'alimentation du lecteur externe (L1, L2).

18. Procédé selon la revendication 17, caractérisé en ce qu'il comprend en outre une fourniture complémentaire d'énergie pour charger les moyens de stockage d'énergie (1, 1'), à partir de la tension abaissée.

19. Procédé selon l'une des revendications 12 à 15, pour alimenter un lecteur externe (L3, L30) connecté à un port parallèle (65) d'un ordinateur (70), caractérisé en ce qu'on accède à la première source de tension d'alimentation (Vcc) via un second port (66) de l'ordinateur (70), notamment un port clavier/souris.

20. Lecteur externe de support d'informations (L1, L2, L3, L10, L20, L30), notamment de disque dur et/ou de CD-ROM, incluant un dispositif d'alimentation (10, 20, 61, 100, 200, 610) selon l'une quelconque des revendications 1 à 10.
